# EUROPÄISCHE PATENTSCHRIFT

(11) **EP 0 401 717 B1**
(45) Veröffentlichungstag und Bekanntmachung des Hinweises auf die Patenterteilung: **25.08.1993**
(21) Anmeldenummer: 90110525.4
(22) Anmeldetag: 02.06.1990
(51) Int. Cl.: B23Q 3/157, B23Q 3/155, B25J 15/04

(54) **Bearbeitungsmachine**
Machine tool
Machine d'usinage

(30) Priorität: 09.06.1989 DE 3918900
(43) Veröffentlichungstag der Anmeldung: 12.12.1990
(73) Patentinhaber: Gebr. Heller Maschinenfabrik GmbH, D-72622 Nürtingen (DE)
(72) Erfinder: Schweizer, Ernst, D-7440 Nürtingen (DE); Kalestra, Horst, D-7441 Neckartenzlingen (DE)
(74) Vertreter: Jackisch-Kohl, Anna-Katharina

(56) Entgegenhaltungen:
- DE-A- 3 440 357
- DE-A- 3 519 706
- DE-A- 3 522 488
- DE-A- 3 705 123
- DE-A- 3 710 472
- DE-A- 3 715 140
- DE-B- 1 477 429
- US-A- 4 354 306

## Beschreibung

Die Erfindung betrifft eine Bearbeitungsmaschine nach dem Oberbegriff des Anspruches 1.

Bei dieser bekannten Bearbeitungsmaschine (US-PS 38 95 427) werden die Verriegelungsglieder durch die unteren Enden von Verriegelungsstangen gebildet, die durch eine Druckfeder nach oben gezogen werden. Die Verriegelungsglieder ziehen hierbei den Werkzeugträger aufwärts gegen die Auflage der Halterung. Die Kraft der Druckfeder muß so groß sein, daß der Werkzeugträger fest gegen die Auflage der Halterung gezogen wird. Darum ist eine solche Einrichtung nur für verhältnismäßig leichte Werkzeugträger geeignet. Schwere Werkzeugträger, die Gewichte bis zu 500 kg und mehr haben können, lassen sich auf diese Weise nicht im Werkzeugträgermagazin halten. Da die Feder frei zugänglich ist, besteht die Gefahr, daß sie beschädigt oder gar zerstört wird. Dann rutscht die jeweilige Verriegelungsstangen mit dem angehängten Werkzeugträger schlag artig nach unten. Dabei besteht die Gefahr, daß der Werkzeugträger die Auflagen und evtl. auch die Werkzeuge beschädigt. Unter Um ständen läßt sich dann das Werkzeugträgermagazin nicht mehr drehen, weil der abgesackte Werkzeugträger beim Drehen des Werkzeugträgermagazins mit anderen Maschinenteilen in Kollision kommt.

Es ist ferner eine Bearbeitungsmaschine bekannt (DE-OS 21 40 203), bei der ein Spindelkopf im Magazinkörper hängt, jedoch nicht durch Verriegelungsglieder fixiert und zentriert ist. Um die Spindelkörper im Magazin dennoch sicher zu halten, ist eine aufwendige konstruktive Ausbildung des Magazins erforderlich.

Es ist schließlich eine Bearbeitungsmaschine bekannt (DE-OS 21 43 383), bei der Einzelwerkzeuge gelagert werden, die in Werkzeughalter eingesetzt sind. Sie haben jeweils einen Flansch, der über etwa seinen halben Umfang in einen etwa halbkreisförmigen Schlitz eines Schlittens eingreift, der die Halterung für das Einzelwerkzeug bildet. Der Schlitten hat einen federbelasteten Stift, der auf dem Flansch des Werkzeughalters unter Federkraft aufliegt und lediglich zur Fixierung des Werkzeughalters, nicht jedoch als Zentrierteil dient. Vielmehr hat der Kopf des Stiftes kleineren Durchmesser als die entsprechende Aufnahme im Flansch des Werkzeughalters.

Der Erfindung liegt die Aufgabe zugrunde, die gattungsgemäße Bearbeitungsmaschine so auszubilden, daß auch schwere Werkzeugspindelträger einwandfrei im Werkzeugspindelträgermagazin gehalten werden können und bei einem eventuellen Ausfall der Verriegelungsglieder nicht die Gefahr besteht, daß der Werkzeugspindelträger schlagartig nach unten fällt.

Diese Aufgabe wird bei der gattungsgemäßen Beabeitungsmaschine erfindungsgemäß mit den kennzeichnenden Merkmalen des Anspruches 1 gelöst.

Bei der erfindungsgemäßen Bearbeitungsmaschine werden die Aufnahmeteile der Werkzeugspindelträger nicht nach oben gezogen; vielmehr liegen die Aufnahmeteile unter dem Gewicht der Werkzeugspindelträger fest auf der Auflage auf. Die nach unten belasteten Verriegelungsglieder der Halterung sichern die Aufnahmeteile. Die Werkzeugspindelträger können dadurch einwandfrei und sicher in der Halterung gelagert werden. Durch den Zentrier- und Fixierteil der Verriegelungsglieder wird erreicht, daß die Werkzeugspindelträger in der Verriegelungsstellung über die Aufnahmeteile nicht nur im Werkzeugspindelträgermagazin fixiert, sondern zusätzlich auch noch zentriert werden. Auf diese Weise lassen sich insbesondere auch schwere Werkzeugspindelträger einwandfrei haltern. Sollte die Belastung der Verriegelungsglieder beeinträchtigt oder gar ausgefallen sein, wird dadurch die Lage der Werkzeugspindelträger in der Halterung nicht beeinträchtigt, weil sie unter ihrem Gewicht auf der Auflage der Halterung aufsitzen und die Verriegelungsglieder unter ihrem Gewicht auf den Aufnahmeteilen der Werkzeugspindelträger liegen bleiben. Mit der erindungsgemäßen Bearbeitungsmaschine ist darum ein gefahrloses Arbeiten möglich.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen:
- Fig. 1: in Stirnansicht eine erfindungsgemäße Bearbeitungsmaschine,
- Fig. 2: die Maschine gemäß Fig. 1 in Seitenansicht,
- Fig. 3 und 4: in Darstellungen entsprechend den Fig. 1 und 2 eine zweite Ausführungsform einer erfindungsgemäßen Maschine,
- Fig. 5: eine Draufsicht auf eine erfindungsgemäße Bearbeitungsmaschine,
- Fig. 6: die Bearbeitungsmaschine gemäß Fig. 5 in Verbindung mit einer Verkettung,
- Fig. 7: eine Draufsicht auf eine weitere Ausführungsform einer erfindungsgemäßen Bearbeitungsmaschine,
- Fig. 8: in vergrößerter Darstellung und im Schnitt längs der Linie VIII-VIII in Fig. 10 eine Einrichtung zum Aufnehmen und Positionieren von Werkzeugträgern in einem Werkzeugträgerwechselmagazin der erfindungsgemäßen Bearbeitungsmaschine,
- Fig. 9: eine Ansicht in Richtung des Pfeiles IX in Fig. 10 auf die Einrichtung gemäß Fig. 8,
- Fig. 10: einen Schnitt längs der Linie X-X in Fig. 9.

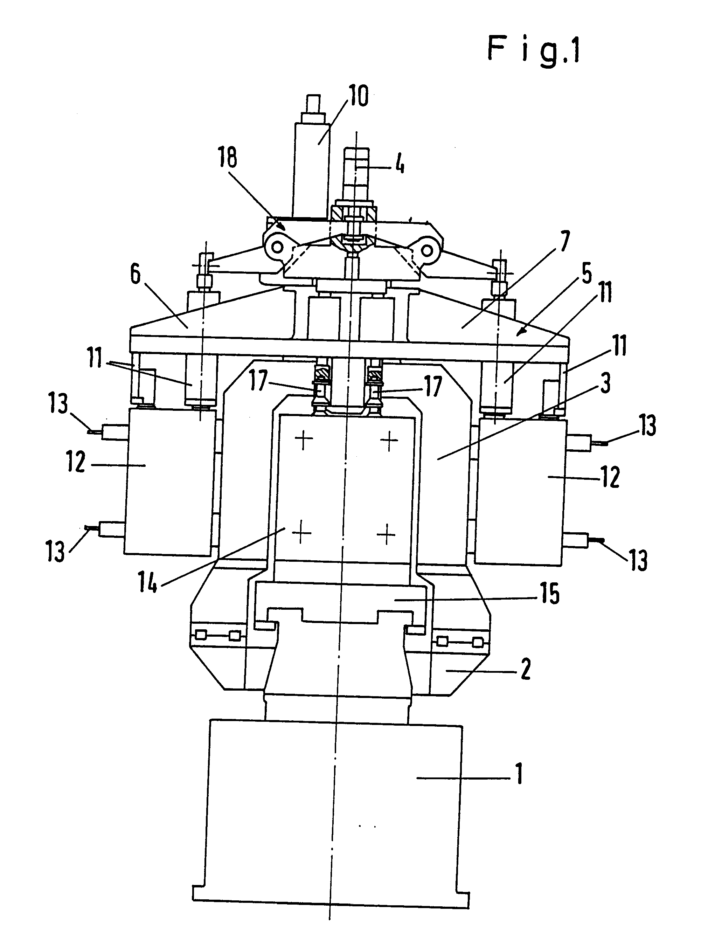

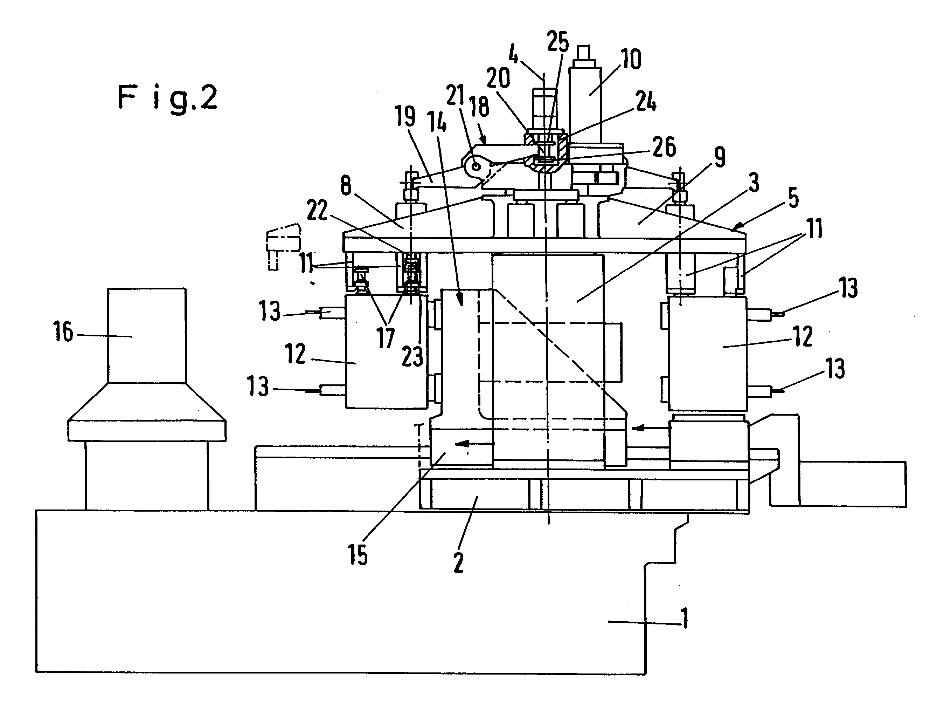

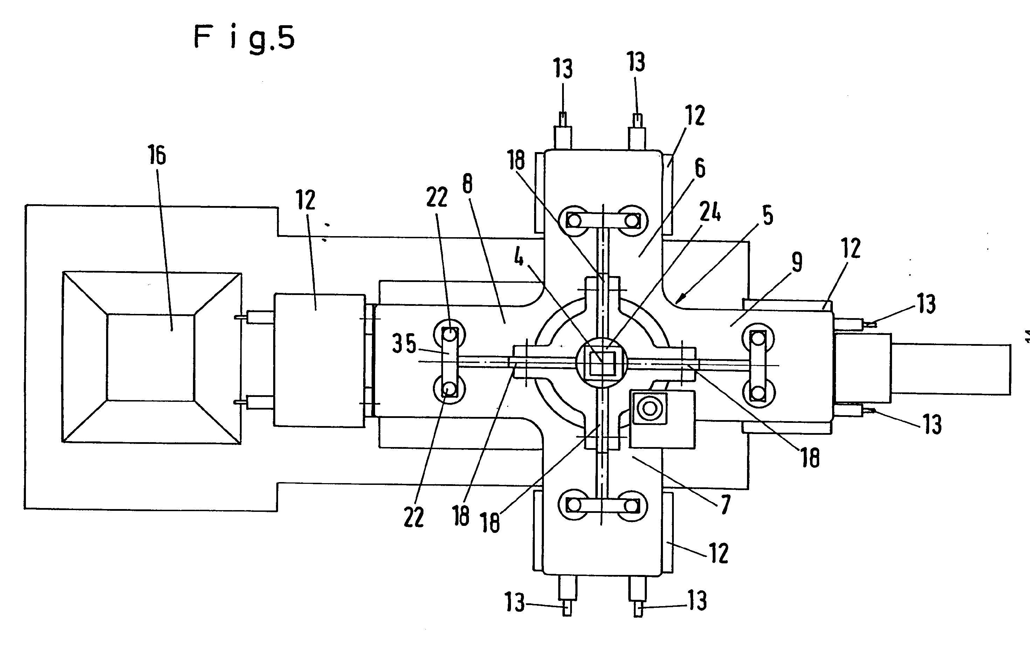

Die Maschine nach den Fig. 1 und 2 hat ein Maschinenbett 1 mit einer Schiebeführung 2 für einen Torständer 3. Auf ihm ist um eine Achse 4 drehbar ein Werkzeugträgermagazin 5 gelagert. Es hat im Ausführungsbeispiel vier senkrecht zueinander liegende Arme 6 bis 9, die jeweils aus zwei mit Abstand und parallel nebeneinander liegenden Armteilen bestehen (Fig. 5). Zum Drehen des Werkzeugträgermagazins 5 ist ein Drehantrieb 10 vorgesehen, der ebenfalls auf dem Torständer 3 angeordnet ist. An der Unterseite der Arme 6 bis 9 sind Greifer 11 vorgesehen, mit denen Werkzeugträger 12 gehalten werden können. An ihnen sind mehrere, im Ausführungsbeispiel vier Werkzeuge 13 gelagert.

Auf dem Maschinenbett 1 ist eine Antriebseinheit 14 parallel zum Torständer 3 verschiebbar gelagert. Die Antriebseinheit 14 ist auf einer Schlitteneinheit 15 angeordnet, die sich zwischen dem Torständer 3 hindurch erstreckt. Mit der Antriebseinheit 14 wird jeweils einer der Werkzeugträger 12 gekuppelt, so daß dessen Werkzeuge 13 drehbar angetrieben werden können. Wie Fig. 2 zeigt, ist die Antriebseinheit 14 mit dem dem zu bearbeitenden Werkstück 16 gegenüberliegenden Werkzeugträger 12 gekuppelt. Dieser Werkzeugträger 12 hängt noch an den entsprechenden Greifern 11 des Werkzeugträgermagazins 5. Die Greifer 11 sind so ausgebildet, daß durch Vorfahren der Antriebseinheit 14 der mit ihm gekuppelte Werkzeugträger 12 vom Werkzeugträgermagazin 5 gelöst wird. An den übrigen Greifern 11 des Werkzeugträgermagazins 5 hängen die anderen Werkzeugträger 12. Mit den Werkzeugen 13 des vorgefahrenen Werkzeugträgers 12 wird das Werkstück 16 bearbeitet. Anschließend wird die Antriebseinheit 14 mit dem Werkzeugträger 12 zurückgefahren. Dabei gelangen am Werkzeugträger 12 vorgesehene Halterungsstücke 17 in Eingriff mit den Greifern 11 des Armes 8. In der in Fig. 2 dargestellten Lage des Werkzeugträgers 12 wird die Kupplung zwischen ihm und der Antriebseinheit 14 gelöst und die Antriebseinheit weiter zwischen dem Torständer 3 zurückgefahren, so daß sie vollständig frei vom Werkzeugträger 12 kommt. In den Greifern 11 wird der Werkzeugträger 12 festgespannt und gesichert. Hierzu ist eine Verriegelungseinrichtung 18 auf dem Torträger 3 vorgesehen. Sie hat einen zweiarmigen Hebel 19, an dessen einem Ende ein Betätigungskolben 20 angreift. Mit ihm kann der Hebel 19 um die Achse 21 geschwenkt werden. Der andere Arm des Hebels 19 wirkt mit einer Verriegelungsstange 22 zusammen. Wird der Hebel 19 durch Betätigen des Kolbens 20 entgegen dem Uhrzeigersinn um die Achse 21 geschwenkt, wird die Verriegelungsstange 22 nach unten gedrückt, wobei ein Verriegelungsglied 23 an seinem unteren Ende auf das jeweilige Halterungsstück 17 drückt. Auf diese Weise wird der Werkzeugträger 12 sicher mit seinen Halterungsstücken 17 in den Greifern 11 gehalten. Anschließend wird mit dem Drehantrieb 10 das Werkzeugträgermagazin 5 um die Achse 4 gedreht, so daß ein anderer Werkzeugträger 12 vor die Antriebseinheit 14 gebracht werden kann. Sie kann dann wieder mit dem Werkzeugträger in bekannter Weise gekuppelt werden. Bei diesem Kuppelvorgang wird auch in bekannter Weise die Antriebsverbindung zwischen der Antriebseinheit 14 und den Werkzeugen 13 hergestellt. Zum Bearbeiten des Werkstückes 16 wird in der beschriebenen Weise die Antriebseinheit 14 mit dem angekuppelten Werkzeugträger 12 gegenüber dem Werkzeugträgermagazin 5 in Richtung auf das Werkstück 16 verschoben.

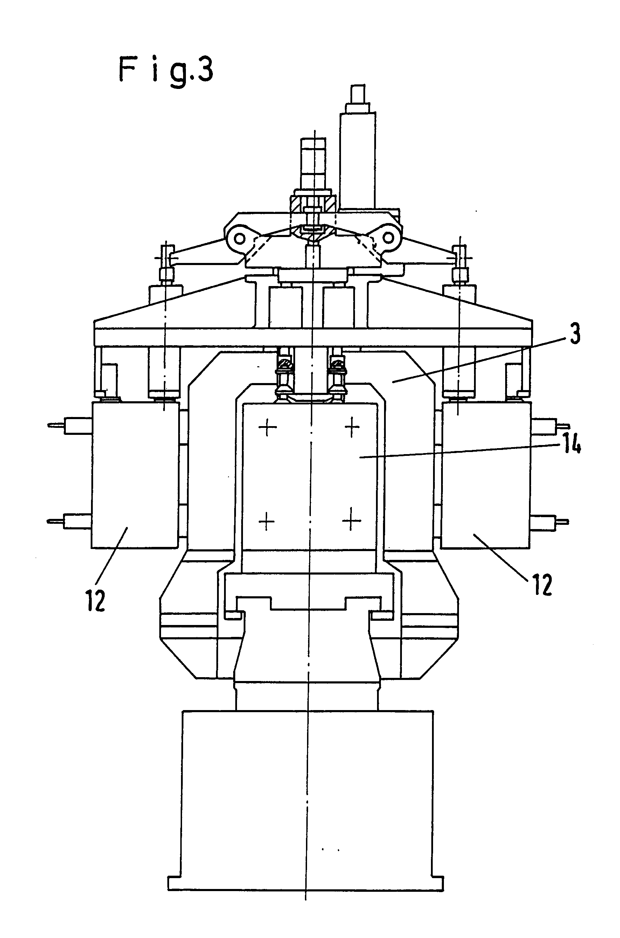

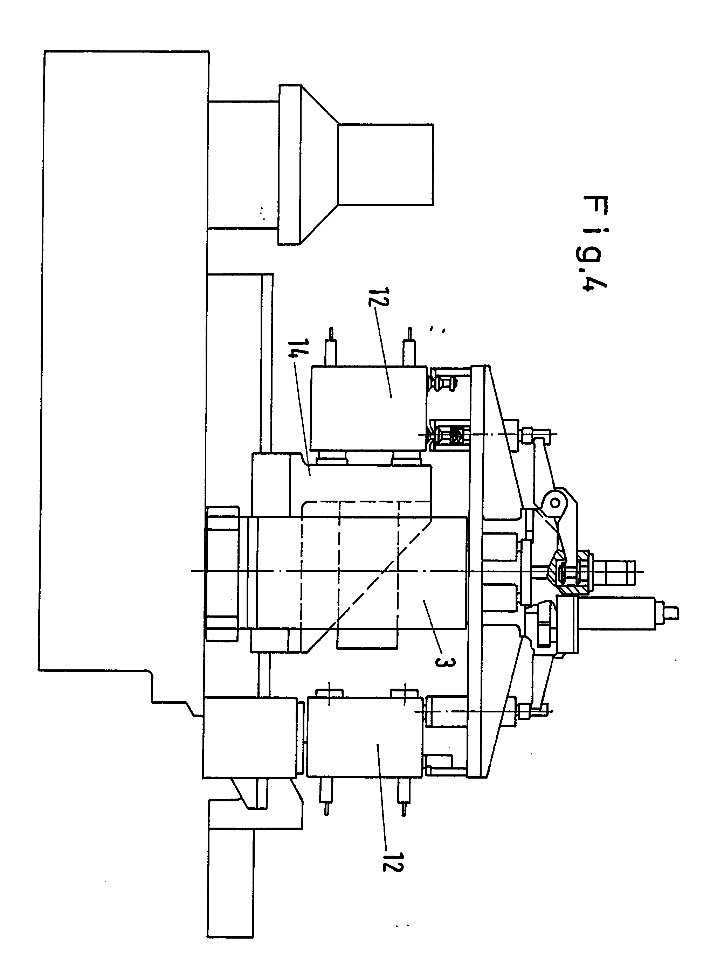

Die Ausführungsform gemäß Fig. 3 und 4 entspricht im wesentlichen dem Ausführungsbeispiel nach den Fig. 1 und 2. Der einzige Unterschied besteht darin, daß der Torständer 3 und damit das Werkzeugträgermagazin 5 unverschiebbar an der Maschine vorgesehen sind. Im übrigen arbeitet diese Maschine aber gleich wie das vorherige Ausführungsbeispiel. Da der Torständer 3 nicht verschiebbar ist, zeichnet sich diese Maschine durch einen konstruktiv einfachen Aufbau aus. Die Ausführungsform nach den Fig. 1 und 2 hat demgegenüber den Vorteil, daß der Torständer 3 zusammen mit dem Werkzeugträgermagazin 5 in Richtung auf das zu bearbeitende Werkstück 16 verschoben werden kann (strichpunktierte Linien in Fig. 2). Die Span-zu-Span-Zeiten können sehr gering gehalten werden, weil die Werkstückträger-Wechselposition in Abhängigkeit zur Länge der Werkzeuge auf den kürzesten Abstand zu dem zu bearbeitenden Werkstück eingestellt werden kann. Die An triebseinheit 14 muß darum nur sehr geringe Wege zurücklegen, um den jeweiligen Werkzeugträger 12 in die Arbeitsposition zu verstellen.

In den Fig. 1 und 3 ist der auf der Antriebseinheit 14 sitzende Werkzeugträger nicht dargestellt, so daß die Stirnseite der Antriebseinheit 14 erkennbar ist. Durch die Kreuze sind vier Kupplungsstellen angedeutet, über welche der jeweilige Werkzeugträger 12 mit der Antriebseinheit 14 gekuppelt wird. Diese Kupplungsstellen sind jeweils gleich ausgebildet.

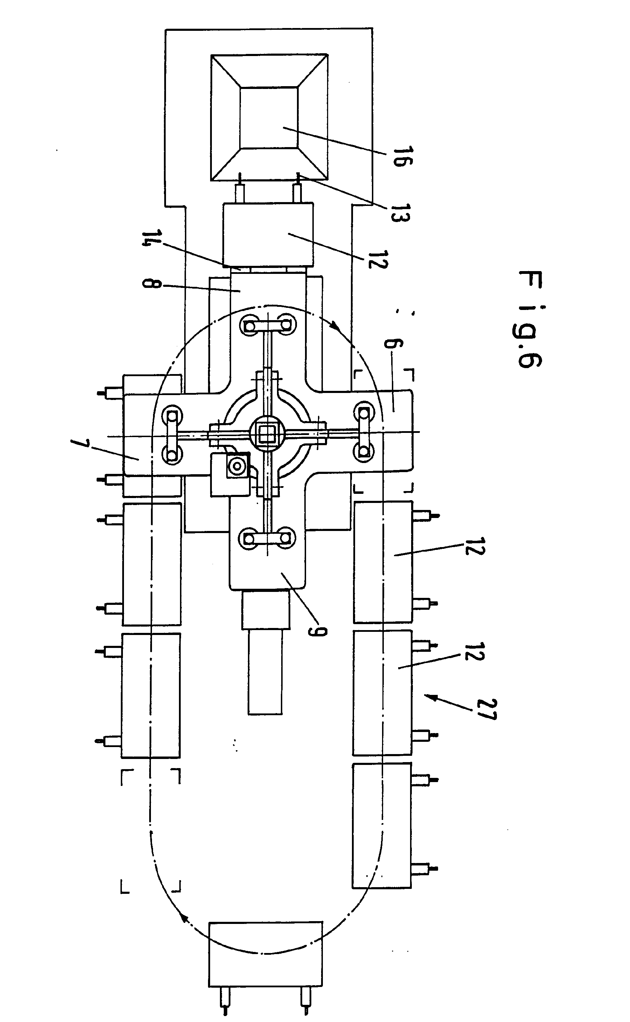

Wie Fig. 5 zeigt, ist jedem Arm 6 bis 9 eine Verriegelungseinrichtung 18 zugeordnet. Sie werden gemeinsam durch einen den Betätigungskolben 20 enthaltenden Antrieb 24 betätigt. Wie Fig. 2 zeigt, hat der Betätigungskolben 20 Bunde 25 und 26, zwischen denen das freie Ende des Hebels 19 liegt. Auf diese Weise sind sämtliche Hebel 19 der Einrichtungen 18 mit dem Betätigungskolben 20 antriebsverbunden. Somit können über den einzigen, vorzugsweise als Hydraulikantrieb ausgebildeten Antrieb 24 alle Verriegelungseinrichtungen 18 in einfacher Weise gleichzeitig betätigt werden. Dies hat den Vorteil, daß eine solche Maschine auch in Verbindung mit einem Speichersystem 27 (Fig. 6) eingesetzt werden kann. In ihm sind die Werkzeugträger 12 nebeneinander angeordnet und können in bekannter Weise in Richtung des eingezeichneten Pfeiles transportiert werden. Während die Werkzeuge 13 des mit der Antriebseinheit 14 gekuppelten Werkzeugträgers 12 das Werkstück 16 bearbeiten, kann in den Arm 7 des Werkzeugträgermagazins 5 aus dem Speichersystem 27 bereits der nächste Werkzeugträger 12 eingefahren werden, während gleichzeitig aus dem Arm 6 der entsprechende Werkzeugträger 12 heraustransportiert wird.

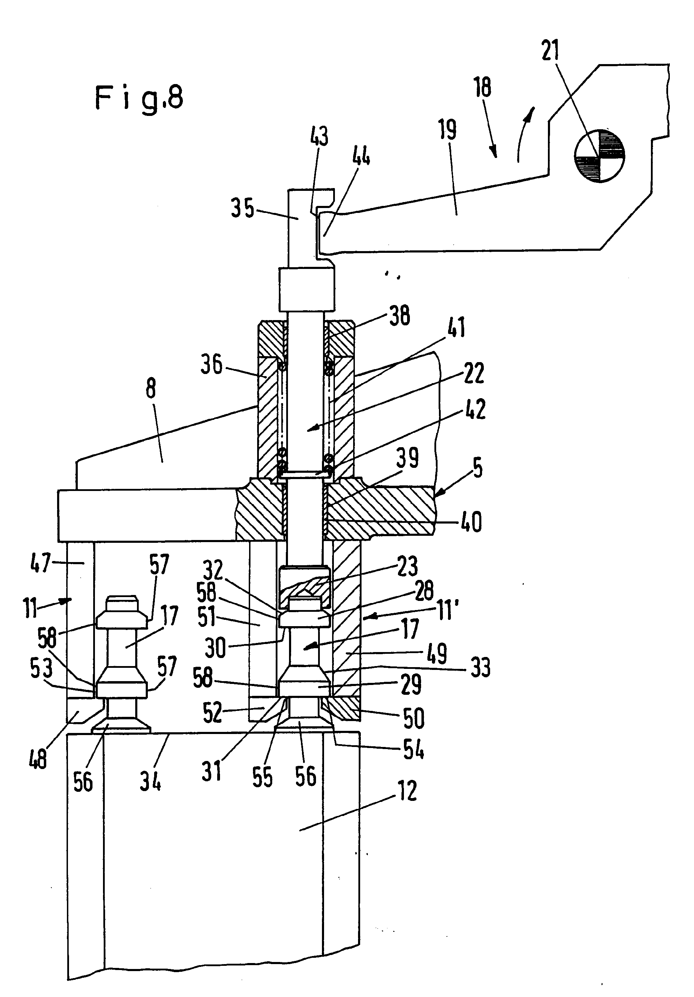

Anhand der Fig. 8 bis 10 wird nun im folgenden die Verriegelung der Werkzeugträger 12 im Werkzeugträgermagazin 5 näher erläutert. Zur Aufnahme und Positionierung der Werkzeugträger 12 am Werkzeugträgermagazin 5 ist im Ausführungsbeispiel jeder Werkzeugträger mit vier als Aufnahmebolzen ausgebildeten Halterungsstücken 17 versehen. Sie sind gleich ausgebildet und haben, wie Fig. 8 zeigt, zwei mit Abstand übereinander liegende Bünde 28 und 29. Der obere Bund 28 hat Abstand von der oberen Stirnseite des Aufnahmebolzens 17. Beide Bünde 28 und 29 haben eine ebene Unterseite 30 und 31 und eine Kegelfläche 32 und 33, die an den Aufnahmebolzen 17 anschließt. Die Aufnahmebolzen 17 sind vorzugsweise lösbar auf der Oberseite 34 der Werkzeugträger 12 befestigt.

Die Verriegelungseinrichtung 18 (Fig. 8) wirkt mit den jeweils innen liegenden Aufnahmebolzen 17 der Werkzeugträger 12 zusammen. Diesen Aufnahmebolzen 17 sind die Verriegelungsstangen 22 zugeordnet, die, wie Fig. 5 zeigt, durch eine Brücke 35 miteinander verbunden sind. Dadurch werden beide Verriegelungsstangen 22 exakt synchron zum Freigeben bzw. Verriegeln der Werkzeugträger 12 verschoben.

Auf dem Werkzeugträgermagazin 5 sind zur Abdeckung der Verriegelungsstangen 22 Hülsen 36, 37 vorgesehen, durch welche die Verriegelungsstangen ragen. Am oberen Durchtrittsende ist die jeweilige Verriegelungsstange 22 durch eine Führungsbuchse 38 geführt, während sie innerhalb der Hülsen 36, 37 Abstand von der Innenwandung der Hülse hat. Das Werkzeugträgermagazin 5 ist mit Durchtrittsbohrungen 39 für die Verriegelungsstangen 22 versehen. In die Durchtrittsbohrungen ist ebenfalls eine Führungsbuchse 40 eingelegt.

Innerhalb der Hülse 36, 37 ist der Verriegelungsstange 22 von einer Druckfeder 41 umgeben, die sich an der oberen Stirnseite der Hülse sowie einem Bund 42 der Verriegelungsstangen abstützt.

Die Brücke 35 hat auf ihrer der Drehachse 4 des Werkzeugträgermagazins 5 zugewandten Seite eine Vertiefung 43, in die das freie Ende 44 des Hebels 19 eingreifen kann. Da die Verriegelungseinrichtungen 18 unverdrehbar angeordnet sind, wird das Werkzeugträgermagazin 5 relativ zu diesen Einrichtungen 18 verdreht. Damit nun die freien Enden 44 der Hebel 19 in die in Fig. 8 dargestellte Eingriffsstellung gelangen können, sind die Vertiefungen 43 in der jeweiligen Brücke 35 in Drehrichtung des Werkzeugträgermagazins 5 offen.

Die Verriegelungsstangen 22 weisen an ihrem unteren, unterhalb des Werkzeugträgermagazins 5 befindlichen Ende das Verriegelungsglied 23 auf, mit dem die Verriegelungsstangen 22 auf die freien Enden der Aufnahmebolzen 17 aufgesetzt werden.

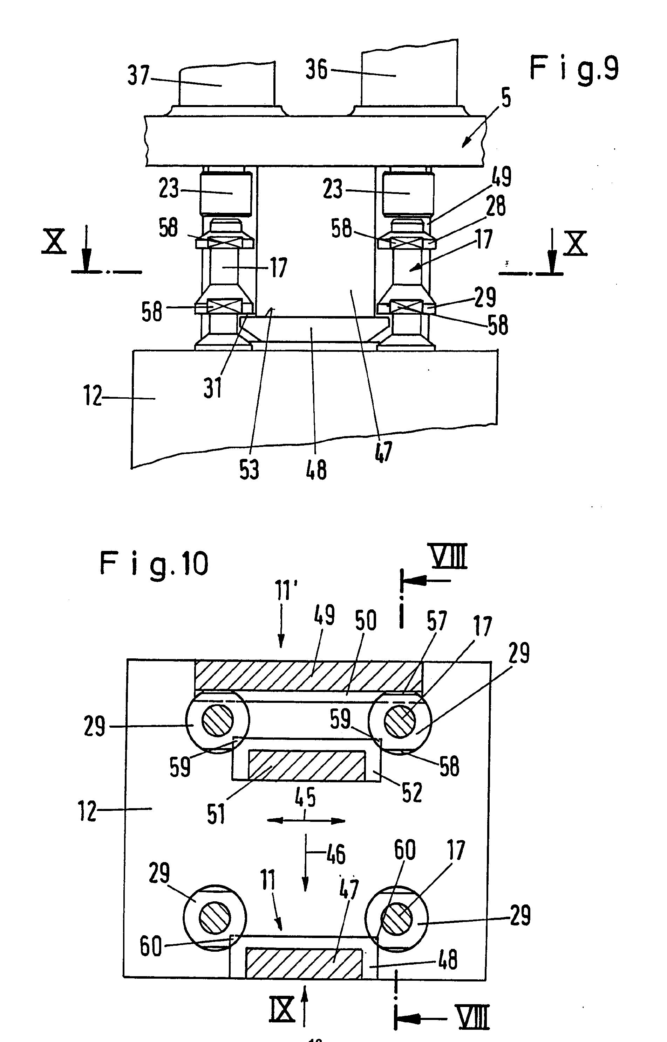

An der Unterseite des Werkzeugträgermagazins 5 sind die Greifer 11, 11' befestigt, in welche die Werkzeugträger 12 mit ihren Aufnahmebolzen 17 eingehängt werden. Die Greifer 11, 11' sind so ausgebildet, daß der Werkzeugträger in zwei zueinander senkrechten Richtungen 45 und 46 (Fig. 10) in die Greifer eingefahren werden kann.

Der Greifer 11' weist eine von der Unterseite des Werkzeugträgermagazins 5 senkrecht abstehende Platte 47 auf, an deren Unterseite eine Griffleiste 48 vorgesehen ist. Sie liegt auf der vom Greifer 11' abgewandten Seite bündig mit der Rückseite der Platte 47 (Fig. 8 und 10). Außerdem überragt die Griffleiste 48 die Platte 47 an den Schmalseiten sowie an der dem Greifer 11' zugewandten Vorderseite der Platte.

Der Greifer 11' hat ebenfalls eine an der Unterseite des Werkzeugträgermagazins 5 befestigte und senkrecht von ihr abstehende Platte 49, an deren Unterseite eine Griffleiste 50 angeordnet ist. Sie hat gleiche Länge wie die Platte 49 (Fig. 10) und steht in Richtung auf den Greifer 11 über sie vor. Der Platte 49 liegt mit Abstand eine kürzere Platte 51 gegenüber, die mittig zur Platte 49 angeordnet ist und gleiche Breite wie die Platte 47 des Greifers 11 hat. Die Platte 51 steht ebenfalls senkrecht von der Unterseite des Werkzeugträgermagazins 5 ab und ist an der Unterseite mit einer Griffleiste 52 versehen, die über die Schmalseiten und die der Platte 49 zugewandte Stirnseite der Platte 51 überragt. Auf der der Platte 47 zugewandten Seite liegt die Griffleiste 52 mit ihrer Rückseite bündig zur Rückseite der Platte 51. Die Platten 49 und 51 des Greifers 11' liegen mit Abstand parallel zueinander. Ihre Griffleisten 50 und 52 haben Abstand voneinander.

Wie Fig. 10 zeigt, ist der Abstand zwischen der Platte 51 des Greifers 11' und der Platte 47 des Greifers 11 größer als der Abstand zwischen den Platten 49 und 51 des Greifers 11'.

Die Oberseiten 53 bis 55 der Griffleiten 48, 50, 52 sind eben und bilden Auflageflächen für den unteren Bund 29 der Aufnahmebolzen 17.

Da die Aufnahmebolzen 17 mit einem Kegelfuß 56 auf dem Werkzeugträger 12 aufsitzen, sind die Unterseiten der Griffleisten 48, 50, 52 sowohl quer als auch in Längsrichtung abgeschrägt, so daß beim Einfahren der Aufnahmebolzen 17 die Kegelfüße 56 nicht in Berührung mit den Unterseiten der Griffleisten kommen.

Wie Fig. 10 zeigt, ist die Länge der Platten 47, 51 kleiner als der in Einfahrrichtung 45 gemessene Abstand zwischen den Bünden 29 der in Einfahrrichtung 45 auf gleicher Höhe liegenden Aufnahmebolzen 17. Dadurch kann der Werkzeugträger 12 mit den Aufnahmebolzen 17 entgegen Pfeilrichtung 46 in das Werkzeugträgermagazin 5 eingefahren werden, ohne daß hierbei die Platten 47 und 51 stören.

Der Abstand zwischen den Griffleisten 50 und 52 des Greifers 11' ist geringfügig größer als der Durchmesser des Aufnahmebolzens 17, jedoch kleiner als der größte Durchmesser des unteren Bundes 29.

Wie Fig. 10 zeigt, sind die Bunde 29 sämtlicher Aufnahmebolzen 17 an diametral einander gegenüberliegenden Stellen mit einer parallel zur Einfahrrichtung 45 liegenden ebenen Abflachung 57 und 58 versehen. Auch die oberen Bunde 28 der Aufnahmebolzen sind mit solchen Abflachungen versehen (Fig. 8 und 9). Der Abstand zwischen den Abflachungen 57 und 58 jedes Bundes 28, 29 ist geringfügig kleiner als der Abstand zwischen den beiden Platten 49 und 51 des Greifers 11'.

Wird der jeweilige Werkzeugträger 12 entgegen Einfahrrichtung 46 in das Werkzeugträgermagazin 5 eingefahren, dann bewegen sich die Aufnahmebolzen 17 mit geringem Abstand beiderseites der Platten 47 und 51. In der in Fig. 10 dargestellten Endlage liegen die Bunde 29 großflächig auf der Griffleiste 50 auf, während sie auf der gegenüberliegenden Griffleiste 52 nur im Eckbereich 59 aufliegen. Die beiden anderen Aufnahmebolzen 17 liegen mit den Bunden 29 im Eckbereich 60 der Griffleiste 48 des Greifers 11 auf. Mit dieser Abstützung des Werkzeugträgers 12 auf den Griffleisten 48, 50, 52 der beiden Greifer 11, 11' wird eine einwandfreie Lagerung des Werkzeugträgers am Werkzeugträgermagazin 5 erreicht.

Infolge der Abflachungen 57, 58 der Bunde 28, 29 können die Werkzeugträger 12 auch in Einfahrrichtung 45 von beiden Seiten her in das Werkzeugträgermagazin 5 eingefahren werden. Wie Fig. 6 zeigt, können auf diese Weise die Werkzeugträger 12 nicht nur in Längsrichtung der Arme 6 bis 9, sondern auch quer dazu in das Werkzeugträgermagazin 5 eingefahren werden. So werden vom Speichersystem 27 aus die jeweiligen Werkzeugträger in Einfahrrichtung 45 in den Arm 7 eingefahren, während die Werkzeugträger in dieser Richtung aus dem Arm 6 herausgefahren werden. Mit der Antriebseinheit 14 wird der Werkzeugträger 12 hingegen in Pfeilrichtung 46 aus dem Arm 8 herausgefahren.

Beim Einfahren des Werkzeugträgers 12 in den jeweiligen Arm 6 bis 9 des Werkzeugträgermagazins 5 liegen die Bunde 29 mit ihren Unterseiten 31 mit geringem Abstand oberhalb der Oberseiten bzw. Auflageflächen 53 bis 55 der Griffleisten 48, 50, 52 (Fig. 9). Dadurch kann der Werkzeugträger ungehindert und problemlos in seine Endlage verschoben werden. Sobald diese Endlage erreicht ist, wird der Betätigungskolben 20 (Fig. 2) aufwärts verschoben, wodurch der mit der Brücke 35 in Eingriff befindliche Arm des Hebels 19 nach unten geschwenkt wird. Die beiden Verriegelungsstangen 22 des Greifers 11' werden dadurch so weit nach unten verschoben, bis die Verriegelungsglieder 23 auf den zugehörigen Aufnahmebolzen 17 aufsitzen. Somit ist der Werkzeugträger 12 zunächst im Werkzeugträgermagazin 5 positioniert. Da der Werkzeugträger jedoch noch mit der Antriebseinheit 14 verbunden ist, haben die Bunde 29 im zentrierten Zustand noch geringfügigen Abstand von den Griffleisten 48, 50, 52. Wenn jetzt die Antriebsverbindung zwischen dem Werkzeugträger 12 und der Antriebseinheit 14 gelöst wird, sinkt der Werkzeugträger 12 unter seinem Gewicht so weit nach unten, daß die Bunde 29 sämtlicher Aufnahmebolzen 17 auf den Griffleisten 48, 50, 52 aufliegen. Dieser Absenkvorgang wird durch die Federn 41 der Verriegelungsstangen 22 unterstützt. Außerdem sorgen die Druckfedern 41 für eine ausreichende Sicherung.

Auf die gleiche Weise werden mit den anderen Verriegelungseinrichtungen 18 die in den anderen Armen befindlichen Werkzeugträger 12 gleichzeitig zentriert und verrieglt. Wenn die Antriebseinheit 14 zurückgefahren ist, kann das Werkzeugträgermagazin 5 mittels des Drehantriebes 10 um die Achse 4 gedreht werden. Da die Werkzeugträger 12 in den Greifern 11, 11' der Arme 6 bis 9 hängen und dort zentriert und verriegelt sind, ist sichergestellt, daß sie beim Drehen des Werkzeugträgermagazins 5 ihre exakte Lage beibehalten. Wenn darum ein anderer Werkzeugträger vor der Antriebseinheit 14 liegt, kann dieser Werkzeugträger mühelos mit der Antriebseinheit 14 gekuppelt werden. Beim Kuppeln werden die Aufnahmebolzen 17 gegen die Kraft der Druckfedern 41 geringfügig angehoben, so daß die Bunde 29 wieder geringfügigen Abstand von den Griffleisten 48, 50, 52 haben. Anschließend werden mit dem Antrieb 24 sämtliche Verriegelungseinrichtungen 18 über den Betätigungskolben 20 betätigt, der nunmehr nach unten verfahren wird. Dadurch schwenken die Hebel 19 im Uhrzeigersinn und ziehen dadurch die Verriegelungsstangen 22 über die Brücken 35 aufwärts, so daß die Verriegelungsglieder 23 von den Aufnahmebolzen 17 freikommen. Der mit der Antriebseinheit 14 gekuppelte Werkzeugträger 12 kann dann aus dem Werkzeugträgermagazin 5 herausgefahren werden.

Ist die Bearbeitungsmaschine nicht mit einem Speichersystem versehen und ist während des Arbeitens mit den Werkzeugen 13 des einen Werkzeugträgers 12 kein Auswechseln der übrigen Werkzeugträger erforderlich, reicht es aus, wenn die Bearbeitungsmaschine nur eine einzige Verriegelungseinrichtung 18 aufweist, mit der die Zentrierung und Verriegelung des mit der Antriebseinheit zu kuppelnden Werkzeugträgers 12 erreicht werden kann. Die übrigen Werkzeugträger 12 bleiben dann in den Armen 6 bis 9 des Werkzeugträgermagazins 5 verriegelt.

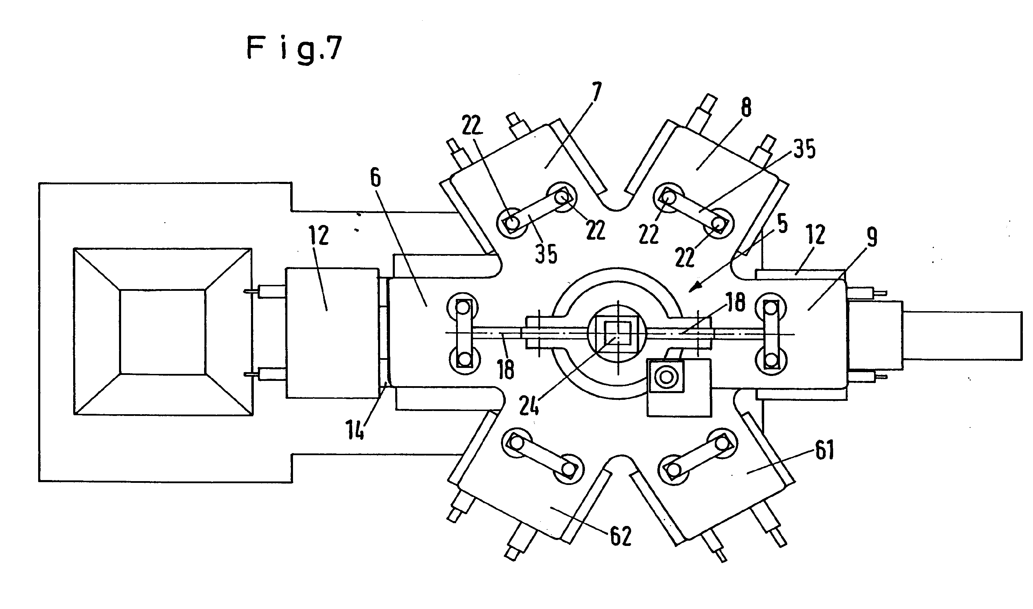

Fig. 7 zeigt eine Bearbeitungsmaschine, deren Werkzeugträgermagazin 5 sechs Arme 6 bis 9, 61, 62 aufweist. Jeder dieser Arme ist mit jeweils zwei Verriegelungsstangen 22 versehen, die durch die Brücke 35 miteinander verbunden sind. Diese Bearbeitungsmaschine hat zwei Verriegelungseinrichtungen 18, die durch den gemeinsamen Antrieb 24 betätigt werden können. Die beiden Einrichtungen 18 liegen fluchtend hinereinander, wobei mit der einen Einrichtung 18 der jeweils mit der Antriebseinheit 14 zu kuppelnde Werkzeugträger 12 zentriert und verriegelt werden. Mit der anderen Einrichtung 18 wird der Werkzeugträger 12 im jeweils gegenüberliegenden Arm des Werkzeugträgermagazins 15 zentriert und verriegelt. Die Werkzeugträger 12 in den übrigen Armen bleiben zentriert und verriegelt im Werkzeugträgermagazin 5.

Selbstverständlich kann für jeden Arm dieser Bearbeitungsmaschine auch eine gesonderte Verriegelungseinrichtung 18 vorgesehen werden, wobei sämtliche Einrichtungen vom Antrieb 24 aus gemeinsam angetrieben werden. Ebenso ist es möglich, auch nur eine einzige Verriegelungseinrichtung vorzusehen, mit welcher der mit der Antriebseinheit 14 zu kuppelnde Werkzeugträger 12 im jeweiligen Arm zentriert und verriegelt bzw. wieder freigegeben werden kann.

## Patentansprüche

1. Bearbeitungsmaschine mit einem Werkzeugspindelträgermagazin (5), das mindestens eine, vorzugsweise mehrere Halterungen (6 bis 9) für Werkzeugspindelträger (12) aufweist, die mit Aufnahmeteilen (17) versehen sind, die mit an den Halterungen (6 bis 9) vorgesehenen Verriegelungsgliedern (23) kuppelbar sind, die am unteren Ende von Verriegelungsstangen (22) vorgesehen sind und die Aufnahmeteile (17) der Werkzeugspindelträger (12) in der Kuppelstellung verriegeln,
dadurch gekennzeichnet, daß die Aufnahmeteile (17) vom Werkzeugspindelträger (12) aufwärts abstehen und an den Aufnahmeteilen (17) angebrachte, insbesondere als Bund (29) ausgeformte Vorsprünge nach einer horizontalen Kuppelbewegung des Werkzeugspindelträgers (12) unter dem Gewicht des Werkzeugspindelträgers (12) auf Auflagen (48, 50, 52) der Halterungen (6 bis 9) aufliegen, und daß die Verriegelungsglieder (23) in Richtung auf die Werkzeugspindelträger (12) belastet sind und einen Zentrier- und Fixierteil haben, mit denen sie in der Verriegelungsstellung über die Aufnahmeteile (17) den Werkzeugspindelträger (12) zentrieren.

2. Maschine nach Anspruch 1,
dadurch gekennzeichnet, daß die Verriegelungsglieder (23) als Buchsen ausgebildet sind, die auf die Aufnahmeteile (17) aufsetzbar sind.

3. Maschine nach Anspruch 1 oder 2,
dadurch gekennzeichnet, daß die Verriegelungsstangen (22) durch die Kraft mindestens einer Feder (41) in Richtung auf den Werkzeugspindelträger (12) belastet sind.

4. Maschine nach einem der Ansprüche 1 bis 3,
dadurch gekennzeichnet, daß die Aufnahmeteile (17) von der Oberseite (34) der Werkzeugspindelträger (12) abstehende Verriegelungsstangen sind, die mindestens einen Bund (29) aufweisen, mit dem sie auf der Auflage (48, 50, 52) aufliegen.

5. Maschine nach einem der Ansprüche 1 bis 4,
dadurch gekennzeichnet, daß die Auflage (48, 50, 52) durch eine Griffleiste gebildet ist, die an einer Platte (47, 49, 51) der Halterung (6 bis 9) vorgesehen ist.

6. Maschine nach Anspruch 5,
dadurch gekennzeichnet, daß die Halterung (6 bis 9) zwei Greifer (11, 11') aufweist, die mit den Platten (47, 49, 51) und den Auflagen (48, 50, 52) versehen sind.

7. Maschine nach Anspruch 6,
dadurch gekennzeichnet, daß der eine Greifer (11') zwei mit Abstand einander gegenüberliegende Platten (49, 51) aufweist, die jeweils mit einer Auflage (50, 52) versehen sind.

8. Maschine nach einem der Ansprüche 4 bis 7,
dadurch gekennzeichnet, daß der Bund (29) breiter ist als der Abstand zwischen-den Auflagen (50, 52) des einen Greifers (11'), jedoch schmaler als der Abstand zwischen den Platten (49, 51) dieses Greifers (11').

9. Maschine nach Anspruch 8,
dadurch gekennzeichnet, daß der Bund (29) parallel zu den Platten (49, 51) des einen Greifers (11') abgeflacht ist.

10. Maschine nach einem der Ansprüche 1 bis 9,
dadurch gekennzeichnet, daß für jeden Werkzeugspindelträger (12) zwei Verriegelungsstangen (22) vorgesehen sind.

11. Maschine nach Anspruch 10,
dadurch gekennzeichnet, daß die beiden Verriegelungsstangen (22) durch eine Brücke (35) miteinander verbunden sind.

12. Maschine nach einem der Ansprüche 1 bis 11,
dadurch gekennzeichnet, daß die Verriegelungsstangen (22) sämtlicher Halterungen (6 bis 9) gleichzeitig betätigbar sind.

13. Maschine nach einem der Ansprüche 1 bis 12,
dadurch gekennzeichnet, daß die einander benachbarten Platten (47, 51) der beiden Greifer (11, 11') eine Breite haben, die kleiner ist als der Abstand zwischen benachbarten Aufnahmeteilen (17) der Werkzeugspindelträger (12).

14. Maschine nach einem der Ansprüche 1 bis 13,die für die Verriegelungsglieder (23) eine Betätigungseinrichtung (18) aufweist, die mit einem zweiarmigen Hebel (19) versehen ist, mit dem die Verriegelungsglieder (23) verstellbar sind,
dadurch gekennzeichnet, daß der zweiarmige Hebel (19) der Betätigungseinrichtung (18) an der Brücke (35) der Verriegelungsstangen (22) angreift.

15. Maschine nach Anspruch 14,
dadurch gekennzeichnet, daß das Werkzeugspindelträgermagazin (5) gegenüber der Betätigungseinrichtung (18) verstellbar, vorzugsweise verdrehbar, ist.

16. Maschine nach einem der Ansprüche 1 bis 15,
dadurch gekennzeichnet, daß der Werkzeugspindelträger (12) in zwei zueinander senkrechten Richtungen (45, 46) in die Halterung (6 bis 9) einfahrbar ist.

## Claims

1. Machine tool with a tool spindle carrier magazine (5), which comprises at least one, preferably several mountings (6 to 9) for tool spindle carriers (12), which are provided with receiving parts (17), which can be connected to locking members (23) provided on the mountings (6 to 9), which locking members are provided at the lower end of locking bars (22) and which lock the receiving parts(17) of the. tool spindle carriers (12) in the connected position, characterised in that the receiving parts (17) project upwards from the tool spindle carrier (12) and projections located on the receiving parts (17) and formed in particular as a collar (29), after a horizontal connecting movement of the tool spindle carrier (12), are supported under the weight of the tool spindle carrier (12) on supports (48, 50, 52) of the mountings (6 to 9) and that the locking members (23) are loaded in the direction of the tool spindle carriers (12) and have a centering and fixing part, by which they centre the tool spindle carriers (12) in the locking position by way of the receiving parts (17).

2. Machine tool according to Claim 1, characterised in that the locking members (23) are constructed as bushes, which can be attached to the receiving parts (17).

3. Machine tool according to Claim 1 or 2, characterised in that the locking bars (22) are loaded by the force of at least one spring (41) in the direction of the tool spindle carriers (12).

4. Machine tool according to one of Claims 1 to 3, characterised in that the receiving parts (17) are locking bars projecting from the upper side (34) of the tool spindle carriers (12), which locking bars comprise at least one collar (29), by which they rest on the support (48, 50, 52).

5. Machine tool according to one of Claims 1 to 4, characterised in that the support (48, 50, 52) is formed by a gripping bar, which is provided on a plate (47, 49, 51) of the mounting (6 to 9).

6. Machine tool according to Claim 5, characterised in that the mounting (6 to 9) comprises two grippers (11, 11'), which are provided with the plates (47, 49, 51) and the supports (48, 50, 52).

7. Machine tool according to Claim 6, characterised in that the one gripper (11') comprises two plates (49, 51) located opposite each other at a distance apart, which plates are respectively provided with a support (50, 52).

8. Machine tool according to one of Claims 4 to 7, characterised in that the collar (29) is wider than the distance between the supports (50, 52) of the one gripper (11'), but narrower than the distance between the plates (49, 51) of this gripper (11').

9. Machine tool according to Claim 8, characterised in that the. collar (29) is flattened parallel to the plates (49, 51) of the one gripper (11').

10. Machine tool according to one of Claims 1 to 9, characterised in that two locking bars (22) are provided for each tool spindle carrier (12).

11. Machine tool according to Claim 10, characterised in that the two locking bars (22) are connected to each other by a bridge (35).

12. Machine tool according to one of Claims 1 to 11, characterised in that the locking bars (22) of all the mountings (6 to 9) can be actuated simultaneously.

13. Machine tool according to one of Claims 1 to 12, characterised in that adjacent plates (47, 51) of the two grippers (11, 11') have a width which is less than the distance between adjacent receiving parts (17) of the tool spindle carriers (12).

14. Machine tool according to one of Claims 1 to 13, which for the locking members (23) comprises an actuating device (18), which is provided with a two-armed lever (19), by which the locking members (23) can be adjusted, characterised in that the two-armed lever (19) of the actuating device (18) acts on the bridge (35) of the locking bars (22).

15. Machine tool according to Claim 14, characterised in that the tool spindle-carrier magazine (5) is adjustable, preferably rotatable, with respect to the actuating device (18).

16. Machine tool according to one of Claims 1 to 15, characterised in that the tool spindle carrier (12) can be introduced into the mounting (6 to 9) in two directions (45, 46) perpendicular to each other.

## Revendications

1. Machine d'usinage avec un magasin de broches porte-outils (5), qui présente une au moins, plusieurs fixations (6 à 9) de préférence pour des broches porte-outils (12) munies de parties réception (17), pouvant être couplées à des organes de verrouillage (23), prévus sur les fixations (6 à 9), disposés sur l'extrémité inférieure de barres de verrouillage (22), et verrouillant les parties réception (17) des broches porte-outils (12) en position d'accouplement, caractérisée en ce que les parties réception (17) dépassent vers le haut de la broche porte-outil (12), en ce que des saillies placées sur les parties réception (17), réalisées en forme de collet (29) notamment, s'appliquent, sous le poids de la broche porte-outil (12), sur des appuis (48, 50, 52) des fixations (6 à 9), après un mouvement d'accouplement horizontal de la broche porte-outil (12), et en ce que les organes de verrouillage (23) sont chargés en direction des broches porte-outils (12), et présentent une pièce de fixation et de centrage, par laquelle ils centrent la broche porte-outil (12), en position de verrouillage, par l'intermédiaire des parties réception (17).

2. Machine suivant la revendication 1, caractérisée en ce que les organes de verrouillage (23) sont réalisés sous forme de douilles, qui peuvent être placées sur les parties réception (17).

3. Machine suivant l'une des revendications 1 et 2, caractérisée en ce que les barres de verrouillage (22) sont chargées par la force d'un ressort (41) au moins en direction de la broche porte-outil (12).

4. Machine suivant l'une quelconque des revendications 1 à 3, caractérisée en ce que les parties réception (17) sont des barres de verrouillage, dépassant de la face supérieure (34) des broches porte-outils (12), et présentant un collet (29) au moins, par lequel elles s'appliquent sur l'appui (48, 50, 52).

5. Machine suivant l'une quelconque des revendications 1 à 4, caractérisée en ce que l'appui (48, 50, 52) est formé par une barre de préhension, prévue sur une plaque (47, 49, 51) de la fixation (6 à 9).

6. Machine suivant la revendication 5, caractérisée en ce que la fixation (6 à 9) présente deux grappins (11, 11'), munis des plaques (47, 49, 51) et des appuis (48, 50, 52).

7. Machine suivant la revendication 6, caractérisée en ce que l'un des grappins (11') présente deux plaques (49, 51) en vis-à-vis, distantes l'une de l'autre et respectivement muni es d'un appui (50, 52).

8. Machine suivant l'une quelconque des revendications 4 à 7, caractérisée en ce que le collet (29) est plus large que la distance entre les appuis (50, 52) de l'un des grappins (11'), mais plus étroit que la distance entre les plaques (49, 51) de ce grappin (11').

9. Machine suivant la revendication 8, caractérisée en ce que le collet (29) est aplati à la parallèle des plaques (49, 51) de l'un des grappins (11').

10. Machine suivant l'une quelconque des revendications 1 à 9, caractérisée par deux barres de verrouillage (22), prévues pour chaque broche porte-outil (12).

11. Machine suivant la revendication 10, caractérisée en ce que les deux barres de verrouillage (22) sont assemblées entre elles par un pont (35).

12. Machine suivant l'une quelconque des revendications 1 à 11, caractérisée en ce que les barres de verrouillage (22) de toutes les fixations (6 à 9) sont actionnables simultanément.

13. Machine suivant l'une quelconque des revendications 1 à 12, caractérisée en ce que les plaques voisines (47, 51) des deux grappins (11, 11') ont une largeur inférieure à l'écartement des parties réception (17) adjacentes des broches porte-outils (12).

14. Machine suivant l'une quelconque des revendications 1 à 13, dotée d'un dispositif de commande (18), muni d'un levier à deux bras (19), pour les organes de verrouillage (23), ce levier permettant de déplacer les organes de verrouillage (23), caractérisée en ce que le levier à deux bras (19) du dispositif de commande (18) attaque le pont (35) des barres de verrouillage (22).

15. Machine suivant la revendication 14, caractérisée en ce que le magasin de broches porte-outils (5) peut se déplacer par rapport au dispositif de commande (18), peut tourner de préférence.

16. Machine suivant l'une quelconque des revendications 1 à 15, caractérisée en ce que la broche porte-outil (12) peut être introduite dans la fixation (6 à 9) dans deux directions perpendiculaires entre elles (45, 46).
